# FASCICULE DE BREVET EUROPEEN

(11) **EP 0 740 625 B1**
(45) Date de publication et mention de la délivrance du brevet: **10.06.1998**
(21) Numéro de dépôt: 95907055.8
(22) Date de dépôt: 23.01.1995
(51) Int. Cl.: B62D 13/00, B62D 1/26, B62D 7/14

(54) **LIAISON DE COMMANDE DIRECTIONNELLE D'UN TRAIN ROUTIER DIRECTEUR ARRIERE**
LENKVERBINDUNG EINES HINTEN GELENKTEN FAHRZEUGZUGES
REAR STEERING AXLE DIRECTIONAL CONTROL LINKAGE FOR ROAD VEHICLES

(30) Priorité: 28.01.1994 FR 9401123
(43) Date de publication de la demande: 06.11.1996
(73) Titulaire: LOHR INDUSTRIE, 67980 Hangenbieten (FR)
(72) Inventeur: LOHR, Robert, F-67980 Hangenbieten (FR)
(74) Mandataire: Metz, Paul
(86) Numéro de dépôt international: FR9500066
(87) Numéro de publication internationale: WO9520516

(56) Documents cités:
- DE-C- 3 841 772
- FR-A- 1 042 459
- FR-A- 2 405 852
- US-A- 2 029 540
- US-A- 3 322 439
- US-A- 3 872 794

## Description

La présente invention se rapporte à une liaison de commande directionnelle pour un véhicule routier, par exemple urbain de transport en commun.

On cherche actuellement le moyen de transport routier idéal qui pourra, sur simple commande, passer d'un système directionnel intégré au véhicule à un système directionnel guidé coopérant avec des structures externes au véhicule et permettant un plus faible encombrement de voie, notamment dans les virages, devenu nécessaire dans les villes ou tout au moins dans les quartiers encombrés du centre des villes.

Pour des raisons de limitation d'encombrement des sols dans les agglomérations, on recherche pour les transports en commun urbains à réduire notablement l'emprise au sol des couloirs de circulation. En plus de la diminution des distances de la carrosserie par rapport aux structures fixes de la voie, les cahiers des charges réclament une réduction de la trace au sol sur tout le trajet.

Pour satisfaire à ces exigences dans les virages et en croisement dans les virages, les constructeurs sont amenés à concevoir des véhicules capables de prendre les virages et de se croiser dans les virages avec le minimum d'emprise au sol.

L'emprise théorique minimale au sol dans les virages est représentée par la trace des sections droites du véhicule centrée sur la trajectoire imposée au véhicule.

Le dépassement de cette trace provient du débordement des extrémités des voitures.

On connaît déjà par le brevet américain US-A-3,322,439 LEMMON un véhicule du type semi-remorque comportant un train directionnel arrière généralement fixe en direction, mais pouvant être commandé en direction à partir de l'orientation de la sellette.

Ce brevet décrit la liaison de commande directionnelle du train arrière s'étendant entre la sellette du tracteur et le train arrière de la semi-remorque.

Cette liaison, de type essentiellement mécanique, est articulée d'une part sur un élément fixe (sellette) du tracteur et d'autre part sur le train arrière de la semi-remorque pouvant être considérée comme un module arrière. Cette liaison s'effectue à travers un organe commandé bistable purement mécanique comportant un coulisseau référencé 46,60 mobile sur et le long de deux tiges parallèles 50 et 60 dont une 50 fixe et l'autre 60 mobile avec la sellette. Le coulisseau est relié par une tringle 44 à la commande directionnelle d'essieu. Il comprend en outre un moyen 62 à actionneur 72 de verrouillage-déverrouillage de son corps sur l'une ou l'autre des tiges et dans une position de référence.

La position de référence est la position du coulisseau imposant l'orientation de ligne droite à l'essieu arrière. Cette position doit correspondre à la position dans laquelle l'extrémité de la tige de l'actionneur 72 est dans l'évidement 76 de la tige 60.

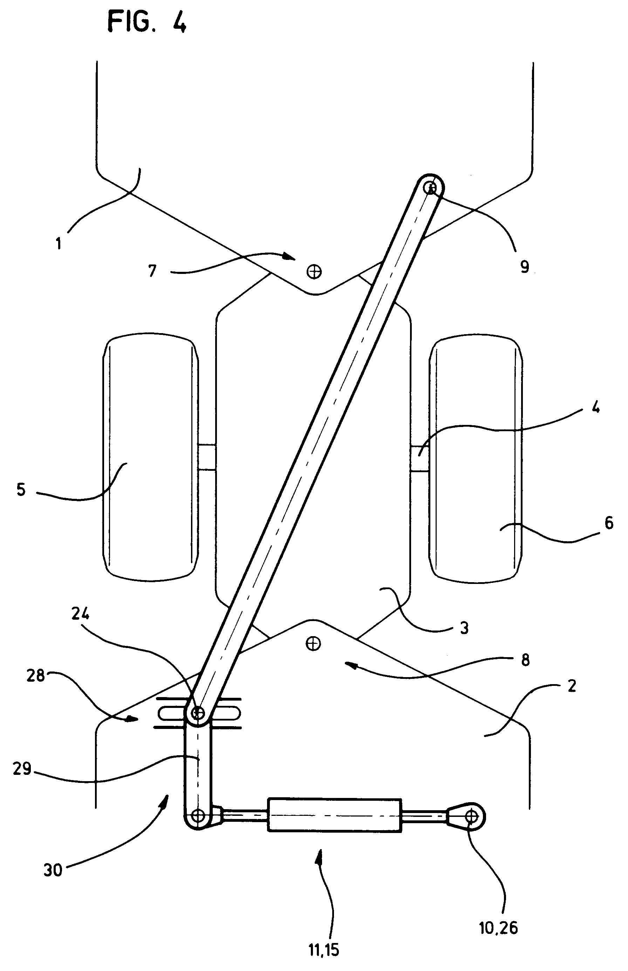

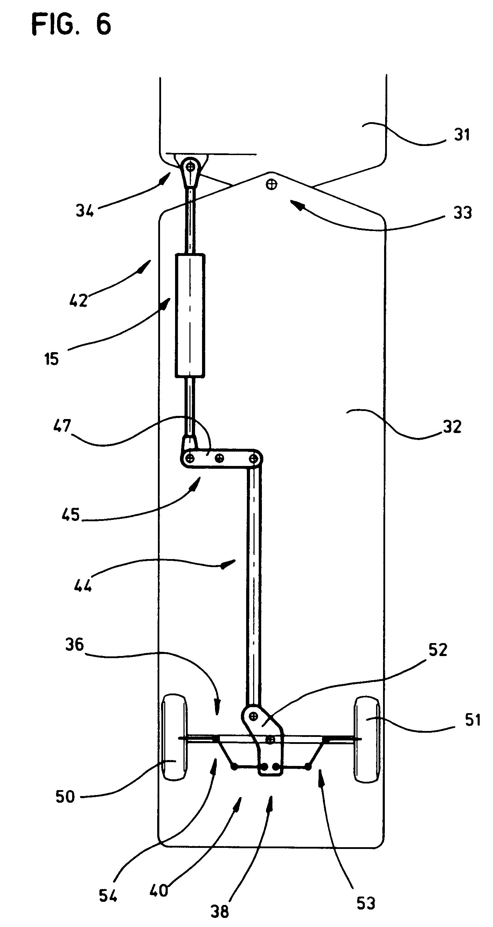

Le coulisseau, le moyen de verrouillage-déverrouillage fonctionnent de façon que la liaison de commande directionnelle présente deux états stables :
. un premier état dans lequel l'actionneur du coulisseau maintient le verrouillage sur la tige 60 dans une position précise rendant la liaison de commande active pour la commande en orientation du train arrière directeur (figure 4) ;
. un deuxième état dans lequel le coulisseau se trouve immobilisé par son actionneur sur la tige 50 et dégagé de la tige 60 commandant en direction fixe de ligne droite la direction du train arrière (figure 6).

Entre ces deux états, il existe à chaque fois un état intermédiaire constituant le passage d'un état dans l'autre et notamment le retour du deuxième état dans le premier état au cours duquel le coulisseau doit être ramené dans sa position de référence.

Selon cette invention, ce passage s'effectue par une intervention manuelle extérieure au dispositif qui n'est pas décrite dans ce brevet.

Cette intervention manuelle extérieure oblige à chaque fois le conducteur à mettre le véhicule en alignement de ligne droite et à descendre ou à contrôler de sa cabine les positions puis à actionner sur place ou depuis sa cabine une commande pour remettre le dispositif dans son autre état stable.

Il faut remarquer que l'invention LE MMON constitue une liaison de commande directionnelle dans le premier et dans le deuxième état. En effet, le maintien permanent en orientation directionnelle de ligne droite doit être considéré également comme une commande.

Il n'existe donc aucun état dans lequel les modules avant et arrière sont guidés de façon indépendante.

De plus, cette invention ne met en oeuvre aucun moyen actif de retour dans la position de référence. Comme déjà indiqué, cet inconvénient oblige le chauffeur à une manoeuvre d'alignement et à une intervention manuelle.

L'invention a comme but général de réduire sur commande l'emprise au sol des véhicules routiers de transport en commun sur toutes les portions d'un circuit urbain de transport, notamment celles non équipées de structures de guidage et de permettre de revenir également sur commande à un mode directionnel moins contraignant et inversement.

L'invention a également pour but de proposer une liaison de commande directionnelle qui permet le passage d'un mode directionnel à un autre aussi facilement et aussi rapidement que possible.

Elle permet de plus, hors des tronçons guidés et sur commande, de transformer un véhicule routier à comportement routier directionnel provenant d'un système directionnel intégré au véhicule en un véhicule à comportement routier quasi monotrace, voire totalement monotrace, en utilisant des galets de guidage.

L'invention s'applique de façon préférentielle mais non exclusive à des véhicules routiers articulés urbains de transport en commun formés de plusieurs voitures ou modules articulés chacun entre eux par un ensemble de roulage intermédiaire porté par un essieu directeur.

On connaît un type de véhicule sur lequel le déposant a imaginé une liaison par bielle oblique entre les modules pour les passagers. Cette invention est décrite dans la demande de brevet française FR-A-2 705620 déposée le 19 avril 1993.

Selon cette invention, des modules intermédiaires autoporteurs forment une liaison composite entre les modules pour les passagers d'un même véhicule de transport en commun. Les modules articulés intermédiaires se composent d'un ensemble de roulage orientable porté par un essieu directionnel, ensemble orientable articulé d'un côté à un module avant par une articulation à trois degrés de liberté et de l'autre côté à un module arrière par une liaison double formée d'une articulation inférieure et une liaison supérieure à articulation à déplacement contrôlé.

Selon une variante équivalente de cette invention, l'ensemble de roulage orientable est relié au module avant par une articulation inférieure à trois degrés et au module arrière par une articulation à deux degrés de liberté. Ces articulations inférieures sont complétées par une articulation supérieure à bielles croisées reliant les deux structures de carrosserie. La liaison oblique vers le haut est la structure de carrosserie du module intermédiaire.

Cette réalisation permet, grâce à la liaison oblique à bielle rigide de longueur constante, d'obtenir un comportement dans les virages qui s'approche du comportement monotrace. Ce comportement est appelé dans ce descriptif comportement quasi monotrace.

L'invention prévoit des moyens spécifiques pour atteindre les buts ci-dessus.

A cet effet, elle propose une liaison de commande directionnelle telle que définie dans la revendication 1.

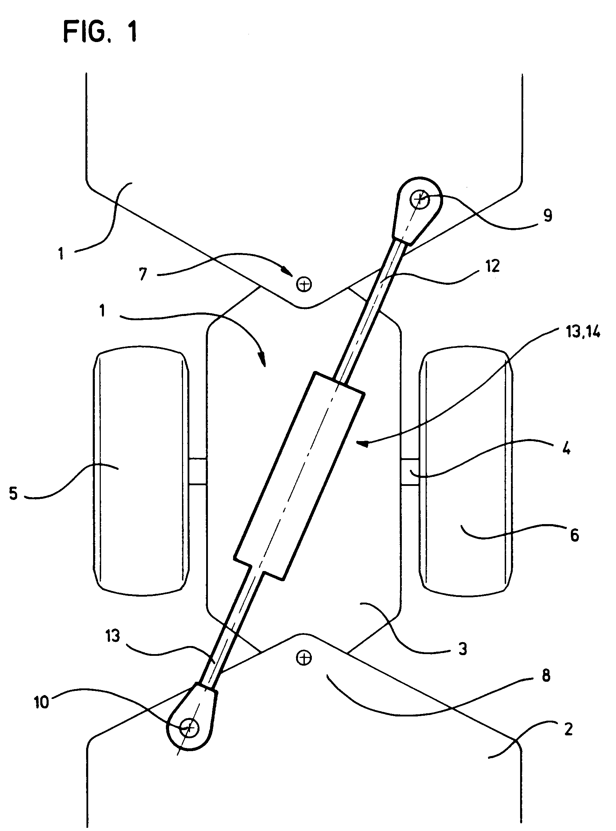

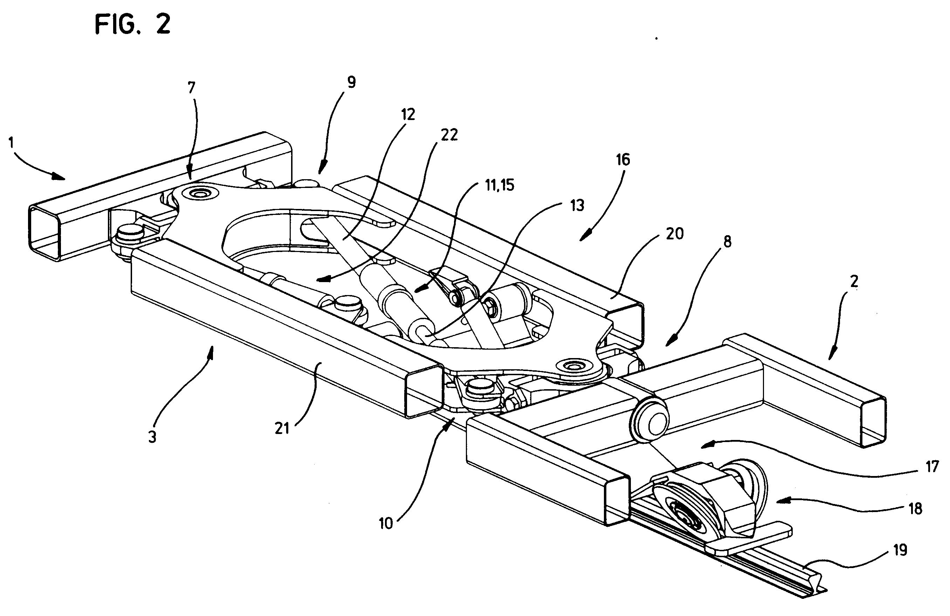

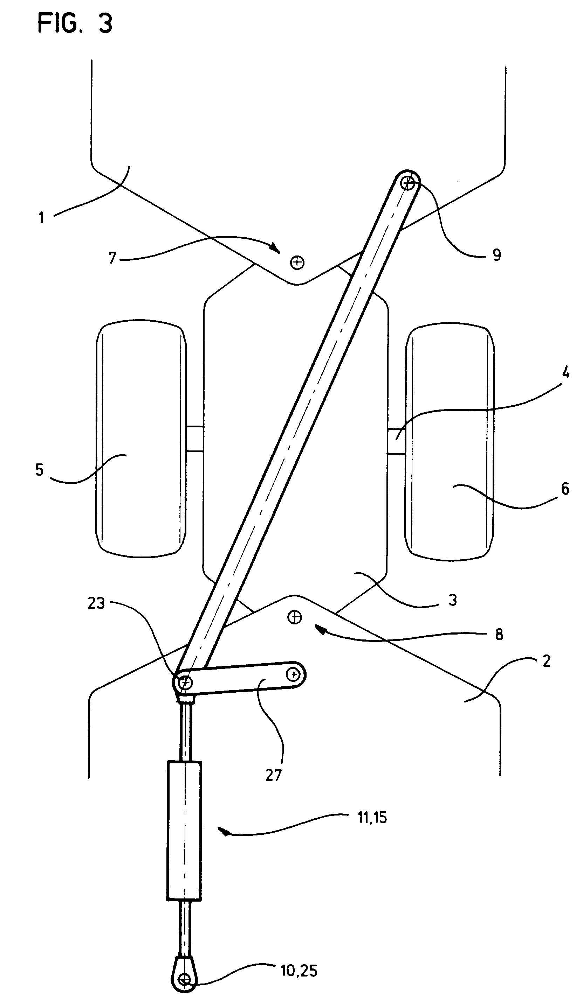

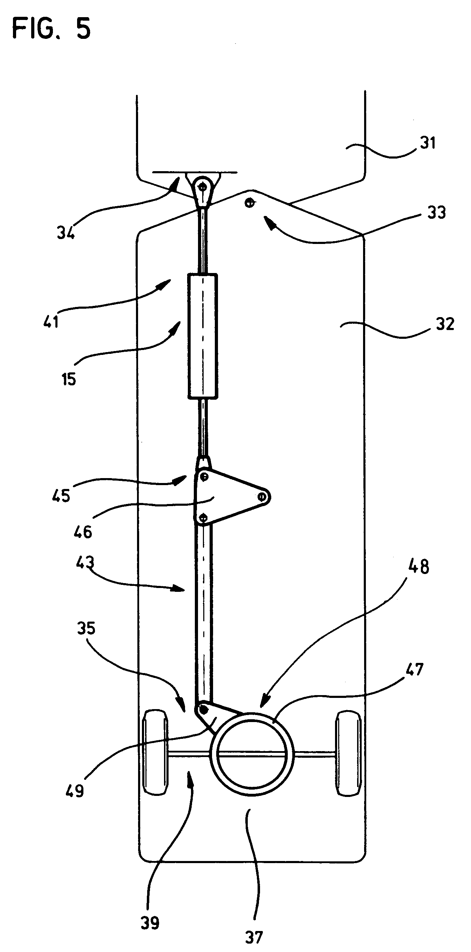

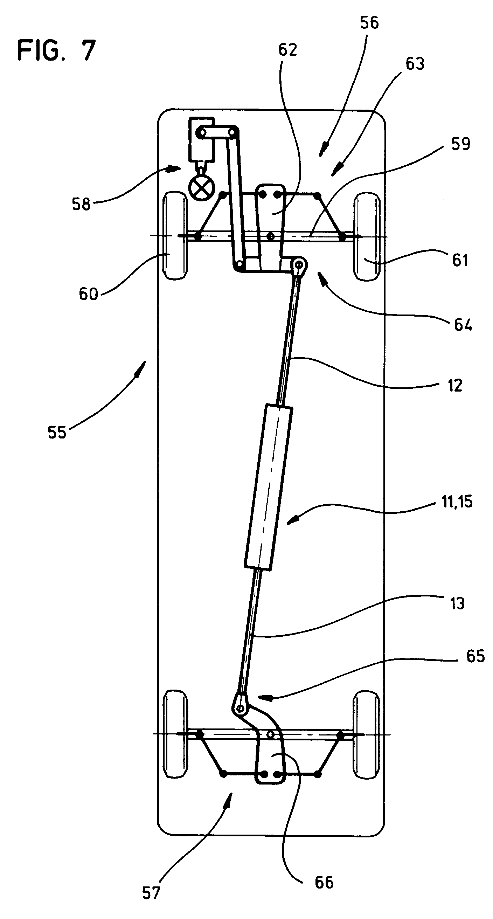

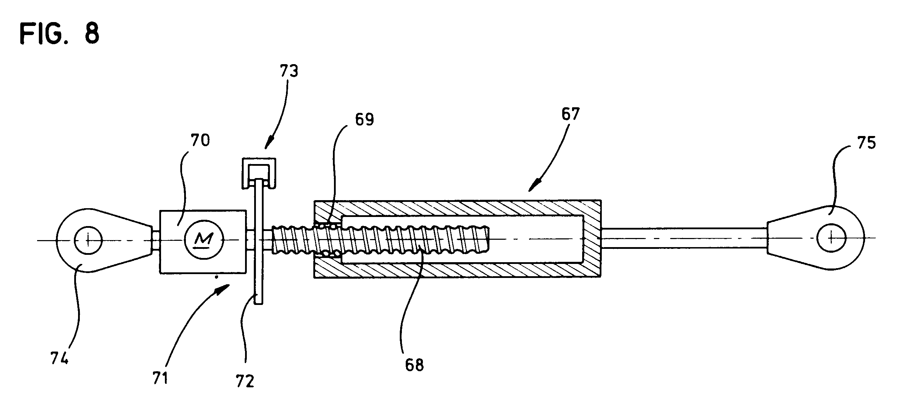

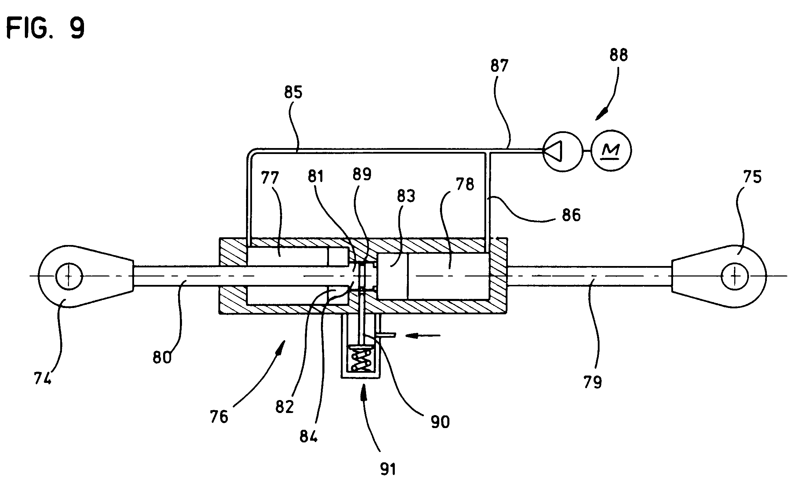

Les caractéristiques techniques et d'autres avantages de l'invention sont consignés dans la description qui suit, effectuée à titre d'exemple non limitatif sur un mode d'exécution en référence aux dessins accompagnants dans lesquels :
. la figure 1 est une vue en plan de la version de base à bielle oblique sur module intermédiaire,
. la figure 2 est une vue en perspective de la même version utilisée sur un véhicule routier articulé à module intermédiaire en coopération alternative avec un bras relevable à galets,
. la figures 3 est une vue en plan d'une version à bielle oblique et levier sur module intermédiaire,
. la figure 4 est une vue en plan d'une version à bielle oblique et glissière sur module intermédiaire,
. la figure 5 est une vue en plan d'une version d'une commande à essieu arrière directeur du type à rond d'avant-train,
. la figure 6 est une vue en plan d'une version d'une commande à ensemble directionnel arrière à fusées directrices,
. la figure 7 est une vue en plan d'un véhicule à ensemble directionnel arrière commandé conformément à la présente invention,
. la figure 8 est une vue en coupe longitudinale de l'organe de désactivation du type mécanique,
. la figure 9 est une vue en coupe longitudinale de l'organe de désactivation dans sa version hydromécanique.

La présente invention procède de l'idée générale inventive qui consiste à procurer des moyens qui permettent facilement et rapidement le passage d'un mode directionnel sans commande directionnelle externe de l'essieu arrière à un mode directionnel avec commande directionnelle externe de l'essieu arrière.

Le principe général inventif consiste donc à libérer la commande directionnelle à un instant donné sur intervention extérieure. Cette libération permettra de mettre en fonctionnement un autre moyen de guidage directionnel, par exemple, un guidage directionnel à galet(s).

Comme il ressort des figures, la liaison de commande directionnelle selon l'invention s'applique à différents types de véhicules routiers, qu'ils soient formés de plusieurs modules articulés entre eux ou sous la forme d'un véhicule simple à deux essieux, dont un train directeur arrière à commander en direction.

On distinguera ci-après, sans esprit de limitation, plusieurs applications types dont la liaison intermodule d'un véhicule articulé formé de plusieurs modules avec modules intermédiaires autoportés ou non et dont un véhicule complet non articulé.

On se référera tout d'abord aux figures 1 à 4 montrant une première série de variantes.

Cette catégorie d'application concerne les véhicules articulés formés de modules successifs dont un module avant 1 et un module arrière 2 séparés par un module intermédiaire 3 porté par un essieu directionnel 4 à deux roues 5 et 6. Le module intermédiaire est relié aux modules adjacents par une articulation avant 7 et une articulation arrière 8. Les articulations sont du type à pivotement simple autour d'un axe vertical, c'est-à-dire à deux degrés de liberté, ou à la cardan, c'est-à-dire à trois degrés de liberté dont le pivotement autour d'un axe vertical.

La liaison de commande directionnelle selon l'invention s'étend entre un point d'articulation avant 9 sur le module avant et un point d'articulation arrière 10 sur le module suivant.

La liaison de commande directionnelle selon l'invention est ici rectiligne et oblique. Elle affecte la forme générale d'une bielle 11 comportant une tige avant 12, une tige arrière 13 et un corps 14.

L'une des tiges 12 ou 13 est mobile axialement à la commande par rapport à l'autre.

Conformément à l'invention, la liaison de commande directionnelle comporte un organe d'activation/désactivation 15 de la liaison. Le corps 14 renferme et constitue fonctionnellement cet organe. Cet organe est prévu pour réaliser, dans un état bloqué appelé activé, la transmission intégrale des mouvements reçus du module avant et réaliser, dans un état débloqué ou libre appelé désactivé, la coupure de la transmission de mouvements en absorbant les mouvements au niveau de son corps.

La fonction générale de cet organe comporte également un retour à une position centrale de référence dite de ligne droite et blocage dans cette position. Ainsi la liaison est qualifiée d'indéformable dans l'état activé et qualifiée de déformable dans l'état désactivé.

L'élément mobile de la liaison se déplace entre une position de référence et deux positions extrêmes symétriques par rapport à sa position de référence correspondant aux deux positions de virage maximal symétriques d'un côté et de l'autre du véhicule routier.

Ces considérations générales s'appliquent à toute l'invention.

L'organe d'activation/désactivation de la liaison sera décrit ci-après.

Pour des raisons de simplification, on l'appellera organe de commutation.

La variante décrite ici est représentée également sur la figure 2 avec quelques adjonctions. Cette figure permet de bien se rendre compte d'une application réelle et pratique.

On remarque sur cette figure la liaison oblique de commande directionnelle sous la forme générale de la bielle 11 montée articulée en oblique entre les deux blocs d'articulation avant 7 et arrière 8 à travers le châssis 16 du module intermédiaire 3. A celui-ci est associé un bras relevable directionnel 17 dont la tête 18 est astreinte à un déplacement de guidage directionnel le long d'un rail de guidage 19. Ce bras 17 est monté pivotant sur les longerons 20 et 21 du corps du châssis 16, par exemple par des bouts d'arbre solidaires des longerons 20 et 21 comme représenté. Ainsi, lorsque le bras directionnel 17 est en fonction, il sert d'organe de direction pour le module intermédiaire 3 dont la direction est alors imposée par le rail de guidage 19 et gouvernée par celui-ci.

Conformément à l'invention, et concernant toutes les variantes, ce bras n'est utile et n'arrive en fonction que lorsque la liaison de commande directionnelle est désactivée.

Il ne constitue qu'un exemple illustratif des moyens de guidage.

On remarque sur cette figure un limiteur 22 de débattement latéral monté pivotant entre un des longerons du châssis 16 du module intermédiaire et le bloc d'articulation avant 7. Ce limiteur 22, utilisé en association avec les autres moyens, a pour but de limiter les déports latéraux et participe au réalignement.

Ce limiteur unique peut être remplacé par un couple de deux limiteurs en disposition longitudinale montés symétriques par rapport au centre du châssis et articulés entre le bloc d'une articulation avant ou arrière et le longeron 20 ou 21 correspondant du châssis 16 du module intermédiaire 3.

On décrira maintenant les variantes suivantes représentées sur les figures 3 et 4.

Ces variantes se distinguent de la première en ce que le point d'articulation arrière sur le module arrière est un point d'articulation intermédiaire 23 ou 24 mobile en position déverrouillée, et en ce que l'organe de commutation 15, également sous la forme générale d'une bielle 11, est monté articulé entre ledit point mobile d'articulation intermédiaire 23 ou 24 et un point fixe 25 ou 26 qui est exactement le point sur lequel est montée l'extrémité libre de l'organe de commutation 15.

Selon la variante de la figure 3, d'une part le point mobile d'articulation intermédiaire 23 est guidé par un levier pivotant 27 qui lui impose une trajectoire circulaire de part et d'autre d'une position centrale et d'autre part, l'organe de commutation 15 est disposé longitudinalement, c'est-à-dire dans l'axe du module suivant, et son extrémité libre est articulée autour du point fixe 25.

Selon la variante de la figure 4, le point mobile d'articulation intermédiaire 24 est assujetti à un déplacement le long d'une ouverture transversale 28 ou le long d'une glissière transversale au module suivant. Ce point d'articulation intermédiaire est relié de façon articulée à l'organe de commutation par un levier de renvoi 29 formant avec la tige mobile de l'organe de commutation une équerre indéformable 30. L'organe de commutation est disposé transversalement au module et son extrémité libre est articulée autour du point fixe 26.

Les variantes représentées sur les figures 5 et 6 concernent un module avant 31 et un module arrière 32 reliés par une seule articulation inférieure 33, sans module intermédiaire.

Selon ces variantes, la liaison de commande directionnelle selon l'invention présente une première extrémité 34 articulée sur un point fixe à l'arrière du module avant 31 et une deuxième extrémité 35,36 articulée sur le mécanisme de direction 37,38 du train directeur arrière 39,40.

Chacune des variantes comporte en série dans la liaison l'organe de commutation 15 sur une première branche 41,42 articulée avec une deuxième branche 43,44 sur un basculeur 45 symétrique de part et d'autre d'une position médiane neutre. Le basculeur est selon le cas une pièce triangulaire pivotante 46 à son extrémité supérieure ou un levier articulé à pivot central 47, comme illustré par les figures respectivement 5 et 6.

Le mécanisme de direction du train directeur arrière 39,40 varie selon le type de direction.

Dans le cas d'un essieu directionnel 39 à rond d'avant train 48 (figure 5), il s'agit d'un simple levier 49 solidaire du rond d'avant-train.

Dans le cas d'un essieu arrière 40 à roues 50 et 51 montées sur fusées directrices, le mécanisme est une platine centrale pivotante 52 actionnant une tringlerie droite 53 et une tringlerie gauche 54 représentant la timonerie de direction.

La variante de la figure 7 se rapporte à une version destinée aux véhicules constitués d'une seule voiture 55 comprenant un ensemble directeur avant 56 et un ensemble directeur arrière 57, par exemple à fusées directrices.

La liaison selon la présente invention assure une commande directionnelle active ou passive sur commande entre l'ensemble directionnel avant 56 et l'ensemble directionnel arrière 57.

L'ensemble directionnel avant 56 se compose d'un volant de direction 58, d'un essieu porteur 59 et de deux roues directrices 60 et 61 actionnées par la direction à partir d'une platine pivotante avant 62 reliée de façon articulée à chacune des roues directrices avant par une timonerie de direction 63.

La liaison de commande selon l'invention s'étend entre un point d'articulation 64 sur la platine pivotante avant 62 et un point d'articulation 65 d'une platine pivotante arrière 66.

Quelle que soit la variante considérée, l'organe de commutation 15 peut se présenter sous différentes formes techniques et différentes spécialités : mécanique, électromécanique, hydromécanique ou autre. Sa fonction générale consiste à présenter deux états de fonctionnement, l'un déverrouillé et l'autre verrouillé, à commuter sur commande le passage d'un état dans l'autre et à identifier la position de verrouillage avant le passage dans cet état.

On a représenté deux variantes à titre d'exemple sur les figures 8 et 9.

On examinera d'abord la version électromécanique en référence à la figure 8.

L'organe présente un corps 67 en logement pour une vis sans fin 68 qui traverse l'une de ses faces d'extrémité par un palier à billes 69, c'est-à-dire un palier autorisant des déplacements longitudinaux rectilignes de la vis sans mouvement de rotation de celle-ci.

La vis est ici l'élément mobile et déplaçable de l'organe de commutation.

Un moteur électrique 70 référencé M ou autre est monté en ligne avec la vis à l'extrémité de celle-ci. Ce moteur est couplé à un système d'indexation ou autre (non représenté) destiné à lui permettre de retrouver la position précise et constante de référence de la vis correspondant à la position à l'état verrouillé.

Il s'agit du rappel en position de référence correspondant à celle dans laquelle la commande est active.

Sur le corps de la vis est monté un frein 71, par exemple à disque 72, avec blocage par un étrier 73. Il s'agit du blocage dans la position à l'état verrouillé.

L'organe de commutation 15 sous la forme générale d'une bielle présente à ses extrémités des pièces 74 et 75 en anneau pour le montage afin de réaliser des articulations à pivotement.

La version hydromécanique représentée sur la figure 9 comporte un corps de vérin 76 renfermant deux chambres, l'une gauche 77 et l'autre droite 78, une tige fixe 79 et une tige mobile 80 dont l'extrémité conformée en piston 81 se déplace à l'intérieur du corps de vérin.

Dans les deux chambres 77 et 78 du corps de vérin 76 se déplace un piston 82,83. Le piston 82 de la chambre de gauche 77 est monté coulissant libre sur la tige 80 tandis que le piston 83 de la chambre de droite 78 est libre en déplacement dans cette chambre.

Le piston 83 est actionné, soit par l'extrémité de la tige, soit par la pression régnant dans la chambre de droite.

Les deux chambres 77 et 78 sont séparées par un passage cylindrique 84 de section telle que l'extrémité de la tige conformée en piston soit ajustée à ce passage 84.

Les chambres 77 et 78 sont alimentées latéralement en extrémité en fluide hydraulique sous pression par deux branches distinctes 85 et 86 se confondant en une seule conduite 87 constituant la sortie d'un groupe hydraulique, par exemple moto-pompe 88 à moteur M.

Selon le cas, la conduite commune 87 d'alimentation aux deux chambres comportera un amortisseur hydraulique réglable ou non actif dans l'état déverrouillé.

L'extrémité de la tige mobile 80 conformée en piston 81 présente une gorge périphérique 89 destinée à coopérer avec un doigt de blocage 90 monté sur un mécanisme de verrouillage 91 adjacent latéral au corps de vérin 76. Ce mécanisme de verrouillage 91 situé au droit du passage 84 comprend le doigt de blocage 90. Le doigt de blocage 90 est monté en rappel élastique de poussée ou de dégagement ou actionné en rappel sur commande ou télécommande extérieure. Une action de verrouillage/déverouillage commandée ou télécommandée est indiquée par une flèche sur la figure.

Ce rappel est un rappel en position de référence de l'élément mobile de l'organe de commutation, tige, vis ou autre, c'est-à-dire dans la position dans laquelle la commande est active.

On expliquera maintenant le fonctionnement d'ensemble de l'invention.

Selon l'état de l'organe de commutation, on peut distinguer deux modes principaux.

Le premier mode est celui d'une liaison indéformable transmettant les mouvements de commande directionnelle, dans lequel l'organe est verrouillé et dit actif. Ce mode est le mode directionnel.

Le deuxième mode concerne celui d'une liaison déformable ou passive dans la transmission des mouvements de commande directionnelle dans lequel l'organe est déverrouillé et dit désactivé. Ce mode est le mode non directionnel.

Dans le mode non directionnel, l'essieu de train arrière peut être utilisé en association avec un moyen de guidage, par exemple un bras directionnel relevable monté sur le châssis d'un module intermédiaire, bras assujetti à un rail de guidage le long duquel il se déplace.

Dans le cas général, l'organe étant désactivé, le module arrière ou le train directeur arrière n'est pas directif car non soumis à la commande directionnelle de la liaison selon l'invention. L'essieu arrière libre en mouvements d'orientation devra être mécaniquement relié à une structure fixe.

Sur commande ou télécommande, l'organe est activé et travaille durant une phase préalable de courte durée au rappel en position de référence de la tige, et va donc se trouver rapidement prêt au verrouillage, et la liaison se trouvera dans l'état et la longueur correspondant au mode directionnel.

Grâce au rappel en position de référence, l'organe de commutation, électromécanique ou hydromécanique, place automatiquement la tige dans la position autour de laquelle ses déplacements se sont effectués dans le cas précédent.

Cette position sera de préférence choisie au point milieu de la course de l'élément mobile dans l'organe de commutation en mode désactivé, de manière à réduire les déplacements de mise en activation de la liaison de commande directionnelle et gagner ainsi en rapidité de passage d'un mode à l'autre.

Se déroule ensuite la phase de verrouillage, c'est-à-dire d'immobilisation dans la position d'activation par un blocage du frein de l'organe dans sa version électromécanique ou par l'engagement du doigt de verrouillage dans son logement pour la version hydromécanique.

Le passage en mode non directionnel s'effectue en sens inverse.

Comme cas pratique, on peut envisager l'exemple d'un véhicule routier articulé provenant des faubourgs d'une ville pour se rendre au centre de la ville.

Il roule dans les faubourgs en mode directionnel intégré, c'est-à-dire en tant que véhicule doté de la liaison directionnelle à l'état actif.

Lors de sa pénétration dans les quartiers à voie étroite ou à couloirs de circulation à largeur limitée, le conducteur commandera le passage en mode non directionnel, et la direction sera prise en charge par une autre commande de direction permettant un comportement parfaitement monotrace.

La liaison de commande directionnelle devenue indéformable, permettra le comportement routier quasi monotrace.

Inversement, lorsqu'il quittera la zone du centre de la ville, le conducteur pourra passer en mode directionnel intégré par une simple commande. L'organe retrouvera rapidement la position de référence de son élément mobile intérieur et le verrouillage deviendra possible dès que les coïncidences de position seront réalisées.

## Revendications

1. Liaison de commande directionnelle comportant un organe bistable transmettant la commande directionnelle ou non à un module arrière ou à un train arrière directeur pour un véhicule routier simple ou articulé formé d'au moins un module avant directeur (1;31) et d'un module arrière (2;32) articulés entre eux directement par une articulation de pivotement (33) ou au moyen d'un module intermédiaire (3) portant un essieu (4), commande directionnelle réalisée à partir d'un indicateur mécanique de direction et de l'organe bistable (15), et articulée d'une part sur le module avant directeur et d'autre part sur le module arrière ou sur le train arrière directeur, sans être articulé à l'éventuel module intermédiaire, pour la commande d'orientation du module arrière ou du train arrière directeur, l'organe bistable qu'elle comprend étant un organe commandé qui comporte un élément mobile, un moyen de verrouillage (71;91) de cet élément mobile dans une position de référence, un moyen de déverrouillage de l'élément mobile et un moyen actif (70;76) de retour de cet élément mobile dans la position de référence de façon que la liaison de commande directionnelle présente deux états stables :
- un état actif dans lequel l'organe bistable (15) maintient le verrouillage de l'élément mobile dans sa position de référence, rendant la liaison de commande opérante pour la commande en orientation du module ou du train arrière directeur
- un état passif dans lequel l'organe bistable (15) se trouve en position déverrouillée autorisant le déplacement de l'élément mobile, la liaison de commande étant interrompue ou devenue inopérante, ne commande plus l'orientation du module arrière ou du train arrière directeur
et un état intermédiaire de passage de l'état passif dans l'état actif au cours duquel l'élément mobile est ramené dans sa position de référence par le moyen actif de retour (70;76).

2. Liaison selon la revendication 1 caractérisée en ce que le module avant directeur (1) est articulé par son extrémité arrière à l'extrémité avant d' un module intermédiaire (3) et en ce que le module arrière (2) est articulé par son extrémité avant à l'extrémité arrière du module intermédiaire (3) qui comporte un train directeur.

3. Liaison selon l'une quelconque des revendications 1 ou 2, caractérisée en ce que l'élément mobile est une bielle (11) de commande de direction du train arrière directeur.

4. Liaison selon l'une quelconque des revendications précédentes caractérisée en ce que la commutation de l'organe commandé bistable (15) de l'état passif à l'état actif génère l'actionnement des moyens de rappel dudit organe.

5. Liaison selon l'une quelconque des revendications précédentes, caractérisée en ce que l'organe commandé bistable (15) est un organe hydromécanique.

6. Liaison selon la revendication 5, caractérisée en ce que l'organe commandé hydromécanique se compose de deux chambres gauche et droite (77,78) renfermées dans un corps de vérin (76), communiquant entre elles par un passage (84) et alimentées en fluide hydraulique sous pression par une branche gauche (85) et par une branche droite (86) réunies entre elles par une conduite commune (87) provenant d'un groupe hydraulique d'alimentation (88) et en ce qu'un élément mobile en forme de tige (80) se déplace le long des chambres, ledit élément mobile présentant une tête conformée en piston (81) ajusté à la section du passage (84) et portant à coulissement un piston (82) se déplaçant dans la chambre de gauche (77), la chambre de droite (78) renfermant un autre piston (83) qui se déplace le long de celle-ci sous la poussée de la tige (80) ou du fluide sous pression et en ce que le dispositif hydraulique présente un moyen de blocage (91) de la tige.

7. Liaison selon la revendication précédente caractérisée en ce que le moyen de blocage (91) est un doigt transversal (90) à déplacement commandé immobilisant la tête de la tige (80) lorsque celle-ci se trouve dans le passage en position de référence.

8. Liaison selon la revendication 6, caractérisée en ce que la conduite (87) d'alimentation commune aux deux chambres comporte un amortisseur hydraulique réglable ou non.

9. Liaison selon l'une quelconque des revendications précédentes de 1 à 4, caractérisée en ce que l'organe commandé bistable (15) est électromécanique.

10. Liaison selon la revendication précédente, caractérisée en ce que l'organe commandé bistable électromécanique se compose d'une vis sans fin (68) abritée dans un logement dont la prolongation du corps forme une extrémité de l'organe et traversant la face d'extrémité opposée à travers un palier à billes (69), l'extrémité de cette vis comportant un frein à disque (71) avec blocage et un moteur (70) en ligne, ladite vis (68) constituant l'élément mobile de l'organe commandé bistable.

11. Liaison selon l'une quelconque des revendications précédentes, caractérisée en ce que l'organe commandé bistable (15) est télécommandé.

12. Liaison selon l'une quelconque des revendications précédentes, caractérisée en ce que, lorsque l'organe commandé bistable (15) est à l'état passif, le train arrière directeur est commandé par des moyens de guidage (17) coopérant avec une autre référence directionnelle (19).

13. Liaison selon la revendication 12, caractérisée en ce que l'autre référence directionnelle (19) est externe.

14. Liaison selon la revendication 13, caractérisée en ce que l'autre référence directionnelle externe est un rail de guidage (19) suivi par un bras directionnel.

15. Liaison selon l'une quelconque des revendications précédentes, caractérisée en ce que, lorsque l'organe commandé bistable (15) est à l'état passif, l'élément mobile de la liaison se déplace entre sa position de référence et deux positions extrêmes symétriques par rapport à la position de référence correspondant aux deux positions de virage maximal symétriques d'un côté et de l'autre du véhicule routier.

## Claims

1. Directional control linkage comprising a bistable member which transmits or does not transmit the directional control to a rear module or to a rear steering axle, for a single road vehicle or for an articulated road vehicle formed by at least one front steering module (1; 31) and one rear module (2; 32) which are articulated to one another directly by a pivoting articulation (33) or by means of an intermediate module (3) carrying an axle (4), the directional control being formed by a mechanical direction indicator and by the bistable member (15) and being articulated, on the one hand, to the front steering module and, on the other hand, to the front steering module and, on the other hand, to the rear module or to the rear steering axle, without being articulated to any possible intermediate module, in order to control the orientation of the rear module or of the rear steering axle, the bistable member which it includes being a controlled member which comprises a movable element, a means (71; 91) for locking this movable element in a reference position, a means for releasing the movable element, and an active means (70; 76) for returning this movable element to the reference position so that the directional control linkage has two stable states :
- an active state in which the bistable member (15) keeps the movable element locked in its reference position rendering the control linkage operative for controlling the orientation of the module or of the rear steering axle,
- a passive state in which the bistable member (15) is disposed in a released position allowing the movable element to move, and in which the control linkage, which has been interrupted or rendered inoperative, no longer controls the orientation of the rear module or of the rear steering axle,
and an intermediate state of transition from the passive state to the active state in the course of which the movable element is returned to its reference position by the active return means (70; 76).

2. Linkage according to Claim 1, characterized in that the front steering module (1) is articulated by its rear end to the front end of an intermediate module (3), and in that the rear module (2) is articulated by its front end to the rear end of the intermediate module (3) which includes a steering axle.

3. Linkage according to any one of Claims 1 and 2, characterized in that the movable element is a connecting rod (11) for controlling the steering of the rear steering axle.

4. Linkage according to any one of the preceding claims, characterized in that the switching of the controlled bistable member (15) from the passive state to the active state gives rise to the operation of the return means of the said member.

5. Linkage according to any one of the preceding claims, characterized in that the controlled bistable member (15) is a hydro-mechanical member.

6. Linkage according to Claim 5, characterized in that the hydro-mechanical controlled member is composed of two chambers, a left-hand chamber and a right-hand chamber (77, 78), enclosed in a cylinder body (76), communicating with one another through a duct (84), and supplied with pressurized hydraulic fluid by a left-hand branch (85) and by a right-hand branch (86) connected to one another by a common duct (87) coming from a hydraulic supply unit (88), and in that the movable element, in the form of a rod (80), moves along the chambers, the said movable element having a piston-shaped head (81) fitting the section of the duct (84) and carrying for sliding a piston (82) moving in the left-hand chamber (77), the right-hand chamber (78) including a further piston (83) which moves along this chamber under the thrust of the rod (80) or of the pressurized fluid, and in that the hydraulic device has a means (91) for locking the rod.

7. Linkage according to the preceding claim, characterized in that the locking means (91) is a transverse pin (90) with controlled movement immobilizing the head of the rod (80) when it is in the duct in the reference position.

8. Linkage according to Claim 6, characterized in that the supply duct (87) common to the two chambers comprises an adjustable or non-adjustable hydraulic shock-absorber.

9. Linkage according to any one of preceding Claims 1 to 4, characterized in that the controlled bistable member (15) is electro-mechanical.

10. Linkage according to the preceding claims, characterized in that the electro-mechanical controlled bistable member is composed of a worm screw (68) housed in a housing an extension of the body of which forms one end of the member, the worm screw extending through the opposite end face through a ball bearing (69), the end of this screw comprising a disc brake (71) with locking and a motor (70) arranged in line, the said screw (68) constituting the movable element of the controlled bistable member.

11. Linkage according to any one of the preceding claims, characterized in that the controlled bistable member (15) is remote-controlled.

12. Linkage according to any one of the preceding claims, characterized in that, when the controlled bistable member (15) is in the passive state, the rear steering axle is controlled by steering means (17) cooperating with another directional reference (19).

13. Linkage according to Claim 12, characterized in that the other directional reference (19) is external.

14. Linkage according to Claim 13, characterized in that the other external directional reference is a guide rail (19) followed by a directional arm.

15. Linkage according to any one of the preceding claims, characterized in that, when the controlled bistable member (15) is in the passive state, the movable element of the linkage moves between its reference position and two extreme positions which are symmetrical with respect to the reference position and which correspond to the two symmetrical maximum turning positions on either side of the road vehicle.

## Patentansprüche

1. Lenkverbindung mit einer bistabilen Einrichtung, die die Lenkbewegung auf eine hintere Einheit oder einen hinteren Lenkschemel überträgt oder nicht, für ein einfaches oder ein Gelenk-Straßenfahrzeug, das aus wenigstens einer vorderen Lenkeinheit (1, 31) und einer hinteren Einheit (2, 32) besteht, die aneinander durch ein Schwenkgelenk (33) direkt oder über eine Achse (4) aufweisende Zwischeneinheit (3) angelenkt sind, wobei die Lenkung mittels eines mechanischen Richtungsindikators und der bistabilen Einrichtung ausgeführt und einerseits an der vorderen Lenkeinheit, andererseits an der hinteren Einheit oder an dem hinteren Lenkschemel angelenkt ist, ohne an der optional vorhandenen Zwischeneinheit angelenkt zu sein, für die Richtungssteuerung der hinteren Einheit oder des hinteren Lenkschemels, wobei die von ihr umfaßte bistabile Einrichtung ein gesteuertes Organ ist, das ein bewegliches Element, ein Verriegelungsmittel (71, 91) fur dieses bewegliche Element in einer Referenzposition, ein Entriegelungsmittel fur dieses bewegliche Element und ein Wirkmittel (70, 76) zur Rückführung dieses beweglichen Elements in die Referenzposition aufweist derart, daß die Lenkverbindung zwei stabile Zustände aufweist :
- ein Wirkzustand, in dem die bistabile Einrichtung (15) die Verriegelung des beweglichen Elements in deren Referenzposition hält und damit die Lenkverbindung zur Steuerung der Ausrichtung der hinteren Einheit oder des hinteren Lenkschemels in Wirkung setzt,
- ein inaktiver Zustand, in dem sich die bistabile Einrichtung (15) in einer entriegelten Position befindet, die das Verlagern des beweglichen Elements ermöglicht und die unterbrochene oder unwirksam gewordene Lenkeinrichtung die Ausrichtung der hinteren Einheit oder des hinteren Lenkschemels nicht mehr steuert,
und ein Zwischenzustand für den Übergang von dem inaktiven Zustand zu dem Wirkzustand, in dessen Verlauf das bewegliche Element durch das Wirkmittel zur Rückführung (70, 76) in seine Referenzposition zurückgeführt wird.

2. Verbindung nach Anspruch 1, dadurch gekennzeichnet, daß die vordere, gelenkte Einheit (1) mit ihrem hinteren Ende am vorderen Ende der Zwischeneinheit (3) angelenkt ist und daß die hintere Einheit (2) mit ihrem vorderen Ende am hinteren Ende der Zwischeneinheit (3) angelenkt ist, die einen Lenkschemel aufweist.

3. Verbindung nach Anspruch 1 oder 2, dadurch gekennzeichnet, daß das bewegliche Element ein Lenker (11) zur Lenksteuerung des hinteren Lenkschemels ist.

4. Verbindung nach einem der Ansprüche 1 bis 3, dadurch gekennzeichnet, daß die Umschaltung der gesteuerten bistabilen Einrichtung (15) aus dem inaktiven in den Wirkzustand die Betätigung der Rückstellmittel dieser Einrichtung auslöst.

5. Verbindung nach einem der Ansprüche 1 bis 4, dadurch gekennzeichnet, daß die gesteuerte bistabile Einrichtung (15) eine hydromechanische Einrichtung ist.

6. Verbindung nach Anspruch 5, dadurch gekennzeichnet, daß die gesteuerte hydromechanische Einrichtung sich aus zwei Kammern -links und rechts- (77, 78) zusammensetzt, die von einem Zylindergehäuse (76) umschlossen sind, untereinander über einen Durchlaß (84) verbunden und mit Hydraulikflüssigkeit unter Druck durch einen linken Strang (85) und einen rechten Strang (86), die zu einer gemeinsamen, von einer hydraulischen Versorgung (88) ausgehenden Zuführung (87) zusammengeführt sind, versorgt sind, und daß sich ein bewegliches Element in Form einer Kolbenstange (80) über die Länge der Kammern bewegt und einen kolbenförmig ausgebildeten, an den Querschnitt des Durchlasses (84) angepaßten Kopf (81) aufweist und einen sich in der linken Kammer (77) verlagernden Kolben (82) gleitend trägt und die rechte Kammer (78) einen weiteren Kolben (83) umschließt, der sich über deren Länge unter dem Schub der Kolbenstange (80) oder der Druckflüssigkeit verschiebt und daß die hydraulische Vorrichtung ein Blockiermittel (91) für die Kolbenstange aufweist.

7. Verbindung nach Anspruch 6, dadurch gekennzeichnet, daß das Blockermittel (91) ein gesteuert verschiebbarer Querzapfen (90) ist, der den Kopf der Kolbenstange (80) festsetzt, wenn dieser sich in dem Durchlaß in der Referenzposition befindet.

8. Verbindung nach Anspruch 6, dadurch gekennzeichnet, daß die Zuführung (87) der gemeinsamen Versorgung der beiden Kammern einen gegebenenfalls regelbaren hydraulischen Dämpfer aufweist.

9. Verbindung nach einem der Ansprüche 1 bis 4, dadurch gekennzeichnet daß die gesteuerte bistabile Einrichtung (15) elektromechanisch arbeitet.

10. Verbindung nach Anspruch 9, dadurch gekennzeichnet, daß die gesteuerte bistabile, elektromechanische Einrichtung aus einer Spindel (68) besteht, die in einer Aufnahme, deren Gehäuse-Verlängerung ein Ende der Einrichtung bildet, untergebracht ist und die Stirnseite am gegenüberliegenden Ende in einem Kugellager (69) durchgreift, wobei die Spindel an ihrem Ende eine Scheibenbremse (71) mit einer Blockierung und einen Motor (70) in Reihe aufweist und das bewegliche Element der gesteuerten bistabilen Einrichtung bildet.

11. Verbindung nach einem der Ansprüche 1 bis 10, dadurch gekennzeichnet, daß die gesteuerte bistabile Einrichtung (15) ferngesteuert ist.

12. Verbindung nach einem der Ansprüche 1 bis 11, dadurch gekennzeichnet, daß der hintere Lenkschemel durch Führungsmittel (17), die mit einer weiteren Richtungsvorgabe (19) zusammenwirken, gesteuert ist, wenn die gesteuerte bistabile Einrichtung (15) sich im inaktivem Zustand befindet.

13. Verbindung nach Anspruch 12, dadurch gekennzeichnet, daß die weitere Richtungsvorgabe (19) eine externe ist.

14. Verbindung nach Anspruch 13, dadurch gekennzeichnet, daß die weitere, externe Richtungsvorgabe eine mit einem Führungsarm zusammenwirkende Führungsschiene (19) ist.

15. Verbindung nach einem der Ansprüche 1 bis 14, dadurch gekennzeichnet, daß das bewegliche Element der Verbindung sich zwischen seiner Referenzposition und zwei in bezug auf die Referenzposition symmetrischen Extrempositionen, die den maximalen symmetrischen Auslenkpositionen zu der einen oder der anderen Seite des Straßenfahrzeugs entsprechen, verlagert, wenn die gesteuerte bistabile Einrichtung (15) sich im inaktiven Zustand befindet.
